# EUROPÄISCHE PATENTSCHRIFT

(11) **EP 1 592 740 B1**
(45) Veröffentlichungstag und Bekanntmachung des Hinweises auf die Patenterteilung: **06.06.2007**
(21) Anmeldenummer: 04703759.3
(22) Anmeldetag: 21.01.2004
(51) Int. Cl.: C08K 5/523, C08L 69/00

(54) **FLAMMWIDRIGE POLYCARBONAT-BLENDS**
FLAME-RESISTANT POLYCARBONATE BLENDS
M LANGES BASE DE POLYCARBONATE ET R SISTANTS LA FLAMME

(30) Priorität: 03.02.2003 DE 10304159
(43) Veröffentlichungstag der Anmeldung: 09.11.2005
(73) Patentinhaber: Bayer MaterialScience AG, 51368 Leverkusen (DE)
(72) Erfinder: SEIDEL, Andreas, 41542 Dormagen (DE); ECKEL, Thomas, 41540 Dormagen (DE)
(86) Internationale Anmeldenummer: PCT/EP2004/000450
(87) Internationale Veröffentlichungsnummer: WO 2004/069914

(56) Entgegenhaltungen:
- EP-A- 0 463 368
- WO-A-00/39210
- WO-A-00/58395
- WO-A-20/04015001
- US-A1- 2002 077 417

## Beschreibung

Die Erfindung betrifft flammwidrige Polycarbonatzusammensetzungen, die Polyalkyl(alkyl)acrylat und halogenfreie Oligophosphate jedoch keine Polymere, an deren Aufbau Butadien, Styrol und Acrylnitril mit mehr als 0,5 Gew.-% beteiligt sind, enthalten sowie Formkörper erhältlich aus diesen Zusammensetzungen. Die erfindungsgemäßen Zusammensetzungen weisen ein gutes Eigenschaftsniveau insbesondere hinsichtlich Bindenahtfestigkeit und Chemikalienbeständigkeit, aber auch hinsichtlich Reißdehnung, Wärmeformbeständigkeit und Schmelzefließfähigkeit auf.

Halogenfrei flammwidrig ausgerüstete Polycarbonatblends sind bekannt.

Die US-A 5,204,394 beschreibt beispielsweise Polymermischungen aus Polycarbonat, einem Styrol-enthaltenden Copolymer und/oder einem Styrol-enthaltenden Pfropfpolymer, die mit oligomeren Phosphorsäureestern flammwidrig ausgerüstet sind. Beispiele für solche Polymermischungen sind PC/ABS- und PC/HIPS-Blends.

Für einige Anwendungen ist es gewünscht, Zusammensetzungen mit vergleichbaren oder verbesserten Eigenschaften bereitzustellen, die keine Polymerkomponenten enthalten, an deren Aufbau Styrol, Butadien und/oder Acrylnitril als Monomerkomponenten beteiligt sind. Solche Polymere und damit auch die diese Polymere enthaltenden Zusammensetzungen enthalten herstellungsbedingt immer Spuren an Restmonomeren Styrol, Butadien, Acrylnitril, welche für den Einsatz der aus ihnen hergestellten Produkte in einigen Anwendungsbereichen als kritisch angesehen werden.

In JP-A 08 259 791 und JP-A 07 316 409 werden Zusammensetzungen beschrieben, die neben Polycarbonat einen Methyhnethacrylat (MMA)-gepfropften Silikon-Acrylat-Kompositkautschuk, einen monomeren oder oligomeren Phosphorsäureester und Polytetrafluorethylen (PTFE) enthalten. Diese Zusammensetzungen sind flammwidrig und weisen eine hohe Kerbschlagzähigkeit auf. Die Fließfähigkeit solcher Zusammensetzungen ist jedoch in der Regel unzureichend, insbesondere, wenn zur Erzielung einer guten Chemikalienbeständigkeit ein Polycarbonat mit hinreichend hohem Molekulargewicht und zur Erzielung einer genügenden Wärmeformbeständigkeit ein hinreichend kleiner Phosphorsäureesteranteil eingesetzt wird. Ähnliches gilt für die Zusammensetzungen, die in der US 6,423,766 B1 und US 6,369,141 B1 beschrieben werden.

EP-A 0 463 368 beschreibt Zusammensetzungen aus Polycarbonat, PMMA, ABS und einem monomeren Phosphorsäureester, die flammwidrig sind und sich durch eine verbesserte Bindenahtfestigkeit auszeichnen. Diese Zusammensetzungen entsprechen nicht dem zuvor genannten Wunsch nach Styrol-, Butadien- und Acrylnitril-freien Materialien.

WO 00/39210 Al offenbart Zusammensetzungen enthaltend Polycarbonat, ein Styrol-Harz, Phosphor-haltige Flammschutzmittel wie z. B. BDP, d) Verstarkungsstoffe, gegebenenfalls Pfropfcopolymere mit einem Silikon-Acrylat-Kautschuk (z. B**.** Metablen S-2001), gegebenenfalls Epoxyd-basiertes Harz, gegebenenfalls fluorierte Polyolefine und gegebenenfalls weitere Additive.

US 2002/077417 offenbart Zusammensetzungen enthaltend Polycarbonat, einen Komposit-Kautschuk (z. B. Metablen S-2001), halogenfreie phosphorhaltige Verbindungen, 0,01-1,0 Gew.-% Polytetrafluorethylen und gegebenenfalls anorganische Füllstoffe, Additive und weitere Harze wie beispielsweise AS-Harze, ABS-Harze, PMMA etc.

Aufgabe der vorliegenden Erfindung war es, flammwidrige Polycarbonat-Zusammensetzungen bereitzustellen, die keine Polymere aufgebaut aus mindestens einem Monomer ausgewählt aus der Gruppe bestehend aus Butadien, Styrol und Acrylnitril enthalten, und somit frei von Butadien-, Acrylnitril- und Styrol-Restmonomeren sind, und sich durch eine gute Eigenschaftskombination aus verbesserter Bindenahtfestigkeit, Chemikalienbeständigkeit, Reißdehnung und Wärmeformbeständigkeit bei im Vergleich zu äquivalenten PC+ABS-Zusammensetzungen unverändert guter Verarbeitbarkeit im Spritzgussverfahren, d.h. Schmelzefließfähigkeit und Flammwidrigkeit auszeichnen.

Überraschend wurde nun gefunden, dass Zusammensetzungen aus aromatischem Polycarbonat, Pfropfpolymerisaten auf Basis von Butadien- und Styrol-freien Kautschuken als Pfropfgrundlage und einer Styrol- und Acrylnitril-freien Pfropfhülle auf Basis von Alkyl(alkyl)acrylaten, halogenfreien Phosphor-Verbindungen als Flammschutzmittel, (Co)Polymeren auf Basis von Alkyl(Alkyl)acrylaten und fluorierten Polyolefinen, welche vorzugsweise als Masterbatch mit (Co)Polymeren auf Basis von Alkyl(Alkyl)acrylaten als Matrix eingesetzt werden, das gewünschte Eigenschaftsprofil aufweisen.

Gegenstand der vorliegenden Erfindung sind daher Zusammensetzung bestehend aus
A) 40 bis 95 Gew.-Teile aromatisches Polycarbonat oder Polyestercarbonat oder Mischungen hieraus,
B) 1 bis 10 Gew.-Teile Polyalkyl(alkyl)acrylat, welches eine Schmelzeflussrate (MVR) von mindestens 8 cm³/10min gemessen bei 230°C mit einer Stempellast von 3,8 kg aufweist,
C) 0,1 bis 25 Pfropfpolymerisat, wobei die Pfropfgrundlage ausgewählt ist aus mindestens einer aus der Gruppe der Silikon-Kautschuke, Acrylat-Kautschuke und Silikon-Acrylat-Kompositkautschuke und wobei die Pfropfhülle aufgebaut ist aus einem (Meth)Acrylsäure(C₁-C₈)-Alkylester oder einem Gemisch von (Meth)Acrylsäure(C₁-C₈)-Alkylestern,
D) 0,2 bis 30 Gew.-Teile organische Phosphorsäureester,
E) 0 bis 2 Gew.-Teile Antidripping-Mittel, und
F) 0 bis 20 Gew.-Teile Additive ausgewählt aus mindestens einem aus der Gruppe der Gleit- und Entformungsmittel, Nukleiermittel, Antistatika, Stabilisatoren, Lichtschutzmittel, Farbstoff, Pigment, Füll- und Verstärkungsstoffe, Flammschutzmittel verschieden von Komponente D, und Flammschutzsynergisten und/oder weitere Polymerverbindungen gemäß Komponente F ausgewählt aus der Gruppe der Polyphenylenoxide, Polyester, Epoxyharze und Novolake,
wobei der Gesamtgehalt an Styrol, Acrylnitril und Butadien in der Zusammensetzung, das heißt die Summe der als Restmonomer und der in Polymeren in gebundener Form vorliegenden entsprechenden Bestandteile, einen Maximalwert von 0,5 Gew.%, bezogen auf die Gesamtzusammensetzung, nicht übersteigt.

Die Zusammensetzungen bestehen vorzugsweise aus
A) 50 bis 90, insbesondere 60 bis 90 Gew.-Teile, ganz besonders bevorzugt 65 bis 85 Gew.-Teile aromatisches Polycarbonat und/oder Polyestercarbonat,
B) ganz besonders bevorzugt 1 bis 6 Gew.-Teile Polyalkyl(alkyl)acrylat, vorzugsweise Polyalkylmethacrylat, insbesondere Polymethylmethacrylat,
C) 0,5 bis 20, insbesondere 1 bis 15, ganz besonders bevorzugt 1 bis 10 Gew.-Teile Pfropfpolymerisat, an dessen Aufbau im wesentlichen kein Styrol, Butadien und Acrylnitril als Monomerkomponenten beteiligt ist, vorzugsweise einen Alkyl(alkyl)acrylat-gepfropften Silikon-, Akrylat, oder Silikon-Acrylat-Kompositkautschuk und
D) 0,5 bis 25, insbesondere 1 bis 20, ganz bevorzugt 2 bis 17 Gew.-Teile Phosphorsäureester, vorzugsweise oligomere Phosphorsäureester, insbesondere solche, die mit bisphenolischen Verbindungen verbrückt sind, und
E) 0 bis 1, insbesondere 0,1 bis 1 Gew.-Teil, ganz besonders bevorzugt 0,2 bis 0,5 Gew.-Teile Antidripping-Mittel, vorzugsweise fluorierte Polyolefine, welche bevorzugt als Masterbatch in (Co)Polymeren auf Basis von Alkyl(Alkyl)acrylaten eingesetzt werden,
wobei die erfindungsgemäßen Zusammensetzungen frei von monomerem oder in polymeren Bestandteilen gebundenem Butadien, Acrylnitril und Styrol sind, und die Summe der Gewichtsteile aller aufgeführten und ggf. weiterer Komponenten auf 100 normiert wird.

Im Sinne der vorliegenden Erfindung werden Zusammensetzungen als frei von Butadien, Styrol und Acrylnitril angesehen, wenn der Gesamtgehalt dieser Verbindungen, das heißt die Summe der als Restmonomer und der in Polymeren in gebundener Form vorliegenden entsprechenden Bestandteile, einen Wert von 0,5 Gew.-%, vorzugsweise 0,2 Gew.-%, insbesondere 0,1 Gew.%, besonders bevorzugt 0,05 Gew.-%, jeweils bezogen auf die Masse der Zusammensetzung nicht übersteigt.

Die erfindungsgemäßen Zusammensetzungen enthalten vorzugsweise keine halogenhaltigen Verbindungen wie beispielsweise auf halogenierten Bisphenolen basierende aromatischen Polycarbonate oder Epoxy-Harze und halogenierte Flammschutzmittel.

### Komponente A

Erfindungsgemäß geeignete aromatische Polycarbonate und/oder aromatische Polyestercarbonate gemäß Komponente A, sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z.B. DE-A 3 077 934).

Die Herstellung aromatischer Polycarbonate erfolgt z.B. durch Schmelzeverfahren oder durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 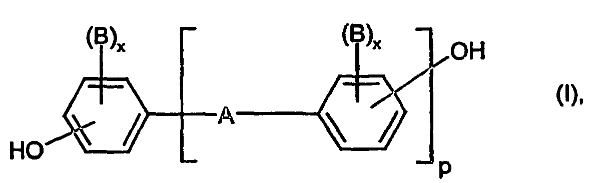 wobei
- A: eine Einfachbindung, C₁ bis C₅-Alkylen, C₂ bis C₅-Alkyliden, C₅ bis C₆-Cycloallcyliden, -O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 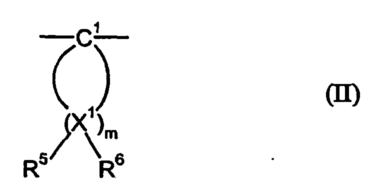 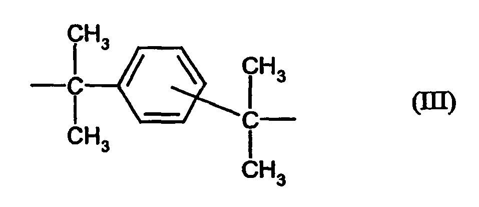
- B: jeweils C₁ bis C₁₂-Alkyl, vorzugsweise Methyl,
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-tert.-Butylphenol, aber auch langkettige Alkylphenole, wie 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt oder besonders bevorzugt genannten Diphenolen.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen substituiert sein können, sowie aliphatische C₂ bis C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mol Diphenol und im Falle von Monocarbonsäurechlorid-Kettenabbrecher auf Mol Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthali.ntetracarbon-säuretetrachlorid oder Pyromellithsäuretetrachlorid, in Mengen von 0,01 bis 1,0 Mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Poly(ester)carbonate haben bevorzugt Gewichtsmittelmolekulargewichte (M_{w} gemessen durch Gelpermeationchromotographie) von ≥18 000, bevorzugt ≥23 000, insbesondere >25 000 g/Mol. Vorzugsweise werden gemäß vorliegender Erfindung Poly(ester)carbonate mit einem gewichtsgemittelten Molekulargewicht bis zu 40 000, bevorzugt bis zu 35 000, besonders bevorzugt bis zu 33 000 g/Mol eingesetzt.

Die thermoplastischen, aromatischen Poly(ester)carbonate können allein oder im beliebigen Gemisch eingesetzt werden.

### Komponente B

Bevorzugte Polyalkyl(alkyl)acrylate sind Polyalkylmethacrylate mit 1 bis 8, vorzugsweise 1 bis 4 Kohlenstoffatomen im Alkylrest, insbesondere Polymethybnethacrylat und Polyethylmethacrylat. Das Polyalkyl(allryl)acrylat kann als Homo- oder Copolymer vorliegen. Im Allgemeinen sind Polymethylmethacrylate kommerziell erhältlich.

Bevorzugt zum Einsatz kommende Polyalkyl(alkyl)acrylate sind solch relativ niedrigmolekulare Polymere mit einer Schmelzeflussrate MVR, gemessen bei 230°C und 3,8 kg Stempellast von mindestens 8 cm³/10min, bevorzugt mindestens 10 cm³/10min.

### Komponente C

Als Pfropfpolymerisate C kommen vorzugsweise solche mit Kem-Schale-Struktur zum Einsatz. Geeignete Pfropfgrundlagen C.1 sind beispielsweise Acrylat-, Polyurethan-, Silikon- sowie Silikon-Acrylat-Kompositkautschuke.

Bevorzugt sind Acrylatkautschuke, Silikonkautschuke und Silikon-Acrylat-Kompositkautschuke. Besonders bevorzugt sind Silikon-Acrylat-Kompositkautschuke.

Diese Pfropfgrundlagen haben im Allgemeinen eine mittlere Teilchengröße (d₅₀-Wert) von 0,01 bis 5 µm, vorzugsweise 0,05 bis 2 µm, insbesondere 0,1 bis 1 µm.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Der Gelanteil dieser Pfropfgrundlagen beträgt mindestens 30 Gew.%, vorzugsweise mindestens 40 Gew.-% (in Toluol gemessen).

Der Gelgehalt wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Besonders bevorzugt als Pfropfgrundlage C.1, sind für die Pfropfpolymere mit Kem-Schale-Struktur C solche Acrylatkautschuke, Silikonkautschuke oder Silikonacrylatkompositkautschuke geeignet enthaltend 0 bis 100 Gew.-%, bevorzugt 1 bis 99 Gew.-%, insbesondere 10 bis 99 Gew.-%, besonders bevorzugt 30 bis 99 Gew.-% Polyorganosiloxan-Komponente und 100 bis 0 Gew.-%, bevorzugt 99 bis 1 Gew.-%, insbesondere 90 bis 1 Gew.%, besonders bevorzugt 70 bis 1 Gew.-% Polyalkyl-(meth)acrylat-Kautschuk-Komponente (die Gesamtmenge der jeweiligen Kautschukkomponente ergibt 100 Gew.-%).

Als bevorzugte Silikonacrylatkautschuke kommen solche zum Einsatz, deren Herstellung in der JP 08 259 791-A, JP 07 316 409-A und EP-A 0 315 035 beschrieben werden. Die diesbezüglichen Inhalte dieser Anmeldungen werden hiermit in diese Anmeldung übernommen.

Die Polyorganosiloxan-Komponente im Silikonacrylat-Kompositkautschuk kann durch Umsetzung eines Organosiloxans und eines multifunktionalen Vemetzungsmittels in einem Emulsionspolymerisationsprozess hergestellt werden. Es ist weiterhin möglich, über Zusatz geeigneter ungesättigter Organosiloxane pfropfaktive Stellen in den Kautschuk einzufügen.

Das Organosiloxan ist im Allgemeinen cyclisch, wobei die Ringstrukturen bevorzugt 3 bis 6 Si-Atome enthalten. Beispielhaft seien genannt Hexamethylcyclotrisiloxan, Octamethylcyclotetrasiloxan, Decamethylcyclopentasiloxan, Dodecamethylcyclo- - hexasiloxan, Trimethyltriphenylcyclotrisiloxan, Tetramethyltetraphenylcyclotetrasiloxan, Octaaphenylcyclotetrasiloxan, welche allein oder in Mischung von 2 oder mehr Verbindungen eingesetzt werden können. Die Organosiloxankomponente sollte am Aufbau des Silikonanteils im Silikonacrylatkautschuk zu mindestens 50 Gew.-%, bevorzugt mindestens 70 Gew.-% bezogen auf den Silikonanteil im Silikonacrylatkautschuk beteiligt sein.

Als Vernetzungsmittel werden im Allgemeinen 3- oder 4-funktionelle Silanverbindungen eingesetzt. Beispielhaft hierfür seien als besonders bevorzugt genannt: Trimethoxymethylsilan, Triethoxyphenylsilan, Tetramethoxysilan, Tetraethoxysilan, Tetra-n-propoxysilan, Tetrabutoxysilan. 4 funktionelle Verzweigungsmittel, insbesondere Tetraethoxysilan. Die Menge an Verzweigungsmittel beträgt im Allgemeinen 0 bis 30 Gew.-% (bezogen auf die Polyorganosiloxankomponente im Silikonacrylatkautschuk).

Zum Einbringen pfropfaktiver Stellen in die Polyorganosiloxankomponente des Silikonacrylatkautschuks kommen bevorzugt Verbindungen zum Einsatz, die eine der folgenden Strukturen bilden:

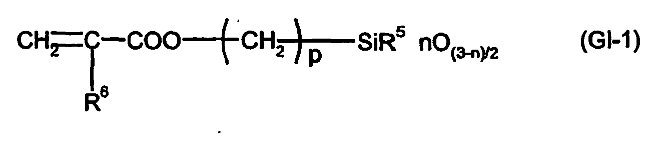

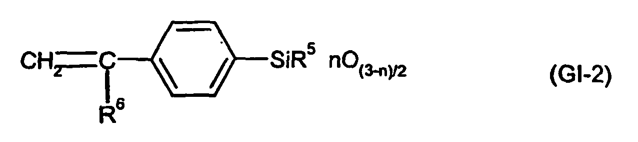

CH₂=CH-SiR⁵ nO_{(3-n)/2} (GI-3)

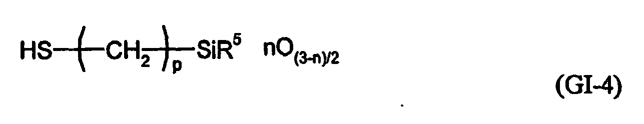

wobei
- R⁵: Methyl, Ethyl, Propyl oder Phenyl,
- R⁶: Wasserstoff oder Methyl,
- n: 0, 1 oder 2 und
- p: eine Zahl von 1 bis 6
bedeuten.

(Meth)acryloyloxysilan ist eine bevorzugte Verbindung zur Bildung der Struktur (GI 1). Bevorzugte (Meth)acryloyloxysilane sind beispielsweise β-Methacryloyloxyethyl-dimethoxy-methyl-silan, γ-Methacryloyl-oxy-propylmethoxy-dimethyl-silan, γ-Methacryloyloxypropyl-dimethoxy-methyl-silan, γ-Methactyloyloxypropyl-trimethoxy-silan, γ-Methacryloyloxy-propyl-ethoxy-diethyl-silan, γ-Methacryloyloxypropyldiethoxy-methyl-silan, γ-Methacryloyloxy-butyl-diethoxy methyl-silan.

Vinylsiloxane, insbesondere Tetramethyl-tetravinyl-cyclotetrasiloxan sind fähig die Struktur GI-2 zu bilden.

Beispielsweise p-Vinylphenyl-dimethoxy-methylsilan kann Struktur GI-3 bilden. γ-Mercaptopropyldimethoxy-methylsilan, γ-Mercaptopropylmethoxy-dimethylsilan, γ-mercaptopropyldiethoxymethylsilan usw. können Struktur (GI-4) bilden.

Die Menge an diesen Verbindungen beträgt 0 bis 10, vorzugsweise 0,5 bis 5 Gew.-% (bezogen auf die Polyorganosiloxankomponente).

Die Acrylat-Komponente im Silikonacrylat-Kompositkautschuk kann aus Alkyl-(meth)acrylaten, Vemetzungsmitteln und pfropfaktiven Monomereinheiten hergestellt werden.

Als Alkyl(meth)acrylate seien beispielhaft und bevorzugt genannt Alkylacrylate wie Methylacrylat, Ethylacrylat, n-Propylacrylat, n-Butylacrylat, 2-Ethylhexylacrylat und Alkylmethacrylate wie Hexylmethacrylat, 2-Ethylhexylmethacrylat, n-Laurylmethacrylat und in besonders bevorzugter Weise n-Butylacrylat.

Als Vernetzungsmittel kommen multifunktionelle Verbindungen zum Einsatz. Es seien beispielhaft hierfür genannt: Ethylenglycoldimethacrylat, Propylenglycoldimethacrylat, 1,3-Butylenglycoldimethacrylat und 1,4-Butylenglykoldimethacrylat.

Zum Einfügen pfropfaktiver Stellen kommen beispielsweise folgende Verbindungen, allein oder in Mischung, zum Einsatz: Allylmethacrylat, Triallylcyanurat, Triallylisocyanurat, Allylmethacrylat. Allylmethacrylat kann auch als Vernetzungsmittel fungieren. Diese Verbindungen werden in Mengen von 0,1 bis 20 Gew.-%, bezogen auf die Acrylatkautschuk-Komponente im Silikonacrylat-Kompositkautschuk eingesetzt.

Methoden zur Herstellung der bevorzugt in den erfindungsgemäßen Zusammensetzungen eingesetzten Silikonacrylatkompositkautschuke sowie dessen Pfropfung mit Monomeren werden beispielsweise beschrieben in US-A 4 888 388, JP 08 259 791 A2, JP 07 316 409A und EP-A 0 315 035. Als Pfropfgrundlage C.1 für das Pfropfpolymer C kommen sowohl solche Silikonacrylat-Kompositkautschuke in Frage, deren Silikon- und Acrylatkomponenten eine Kem-Schale-Struktur bilden, als auch solche, die ein Netzwerk bilden, in denen Acrylat- und Silikonkomponente völlig miteinander durchdrungen sind ("interpenetrating network").

Die Pfropfpolymerisation auf die zuvor beschriebenen Pfropfgrundlagen kann in Suspension, Dispersion oder Emulsion durchgeführt werden. Bevorzugt ist die kontinuierliche oder diskontinuierliche Emulsionspolymerisation. Diese Pfropfpolymerisation wird mit Radikalinitiatoren durchgeführt (z.B. Peroxiden, Azoverbindungen, Hydroperoxiden, Persulfaten, Perphosphaten) und gegebenenfalls unter Einsatz von anionischen Emulgatoren, z.B. Carboxoniumsalzen, Sulfonsäuresalzen oder organischen Sulfaten. Dabei bilden sich Pfropfpolymerisate mit hohen Pfropfausbeuten, d.h. ein großer Anteil des Polymerisates der Pfropfmonomeren wird an den Kautschuk chemisch gebunden.

Die Pfropfhülle C.2 wird aus (Meth)Acrylsäure-(C₁-C₈)-Alkylester, vorzugsweise Methylmethacrylat, n-Butylacrylat und/oder t-Butylacrylat, gebildet.

Besonders bevorzugt besteht die Pfropfhülle aus einem oder einer Mischung mehrerer reiner (Meth)Acrylsäure-(C₁-C₈)-Alkylester, insbesondere aus reinem Methylmethacrylat.

### Komponente D

Bevorzugt kommen als FR-Additiv zum Einsatz solche halogenfreien oligomeren Phosphor- bzw. Phosphonsäureester der allgemeinen Formel (IV) 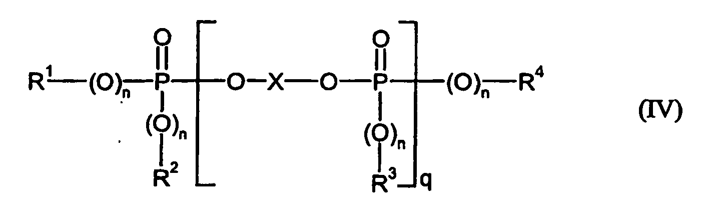 worin
- R¹, R², R³ und R⁴,: unabhängig voneinander jeweils C₁ bis C₈-Alkyl, jeweils gegebenenfalls durch Alkyl, vorzugsweise C₁ bis C₄-Alkyl, substituiertes C₅ bis C₆-Cycloalkyl, C₆ bis C₂₀-Aryl oder C₇ bis C₁₂-Aralkyl,
- n: unabhängig voneinander, 0 oder 1
- q: 0 bis 30 und
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁ bis C₄-Alkyl, Phenyl, Naphthyl oder Phenyl-C₁-C₄-alkyl. Die aromatischen Gruppen R¹, R², R³ und R⁴ können ihrerseits mit Alkylgruppen, vorzugsweise C₁ bis C₄-Alkyl substituiert sein. Besonders bevorzugte Aryl-Reste sind Kresyl, Phenyl, Xylenyl, Propylphenyl oder Butylphenyl.
- X: in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.
- n: in der Formel (IV) kann, unabhängig voneinander, 0 oder 1 sein, vorzugsweise ist n gleich 1.
- q: steht für Werte von 0 bis 30, vorzugsweise 0,5 bis 15, besonders bevorzugt 0,8 bis 10 , insbesondere 1 bis 5, ganz besonders bevorzugt 1 bis 2,
- X: steht besonders bevorzugt für 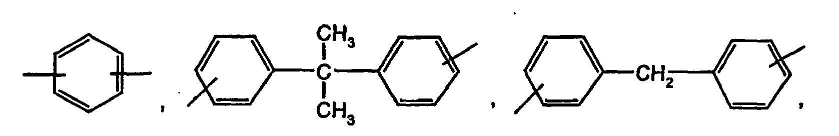 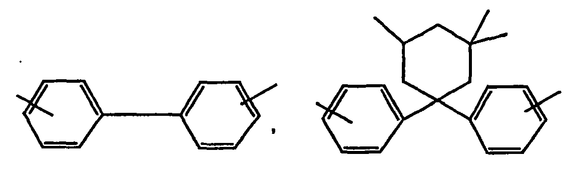 insbesondere leitet sich X von Resorcin, Hydrochinon, Bisphenol A oder Diphenylphenol ab. Besonders bevorzugt leitet sich X von Bisphenol A ab.

Weitere bevorzugte phosphorhaltige Verbindungen sind Verbindungen der Formel (IVa) 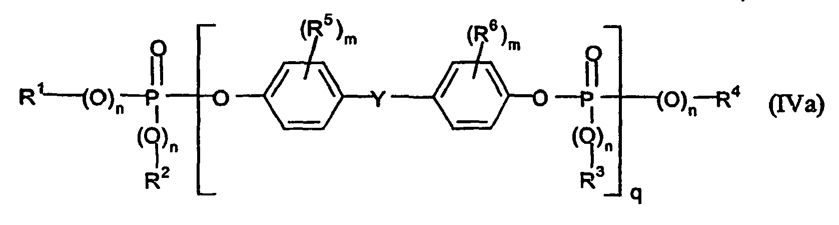 wobei
- R¹, R², R³, R⁴, n und q: die bei der Formel (IV) angegebene Bedeutung haben,
- m: unabhängig voneinander 0, 1 oder 2,
- R⁵ und R⁶: unabhängig voneinander C₁ bis C₄-Alkyl, vorzugsweise Methyl oder Ethyl und
- Y: C₁ bis C₇-Alkyliden, C₁-C₇-Alkylen, C₅ bis C₁₂-Cycloalkylen, C₅ bis C₁₂-Cycloalkyliden, -O-, -S-, -SO₂ oder -CO-, vorzugsweise Isopropyliden oder Methylen, bedeuten.

Besonders bevorzugt ist 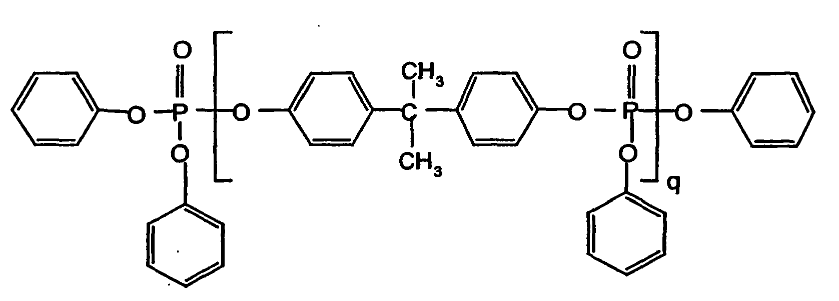 mit q = 1 bis 2.

Die Phosphorverbindungen gemäß Komponente D sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschmmatographie (GPC)) die Zusammensetzung der Phosphat-Mischung (Molekulargewichtsverteilung) bestimmt wird und daraus die Mittelwerte für q berechnet werden.

### Komponente E

Die Flammschutzmittel entsprechend Komponente D werden oft in Kombination mit sogenannten Antidrippingmitteln verwendet, welche die Neigung des Materials zum brennenden Abtropfen im Brandfall verringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden fluorierte Polyolefine als Antidrippingmittel eingesetzt.

Fluorierte Polyolefine sind bekannt und beispielsweise in der EP-A 0 640 655 beschrieben. Sie werden zum Beispiel unter der Marke Teflon^{®} 30N von DuPont vertrieben.

Die fluorierten Polyolefine können in reiner Form eingesetzt werden. Bevorzugt werden sie jedoch in Form eines Masterbatches eingesetzt.

Als solches Masterbatch kommen beispielsweise koagulierte Mischungen von Emulsionen der fluorierten Polyolefine mit Emulsionen der Pfropfpolymerisate (Komponente C) oder mit Emulsionen eines (Co)Polymerisats auf Acrylat-Basis (Komponente B) in Frage, wobei das fluorierte Polyolefin als Emulsion mit einer Emulsion des Pfropfpolymerisats oder des Copolymerisats gemischt und anschließend koaguliert wird.

Weiterhin können die Masterbatche durch Präcompoundierung der fluorierten Polyolefine mit dem Pfropfpolymerisat (Komponente C) oder (Co)Polymerisat (Komponente B), vorzugsweise Polymethylmethacrylat hergestellt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die Masterbatche können weiterhin durch Emulsionspolymerisation mindestens eines Alkyl(alkyl)Akrylat-Monomers in Gegenwart einer wässrigen Dispersion des fluorierten Polyolefins hergestellt werden. Das Polymerisat wird nach saurer Fällung und nachfolgender Trocknung als rieselfähiges Pulver eingesetzt.

Die Masterbatche besitzen üblicherweise Feststoffgehalte an fluoriertem Polyolefin von 5 bis 95 Gew.%, vorzugsweise 7 bis 80 Gew.-%.

Die fluorierten Polyolefine kommen vorzugsweise in Konzentrationen von 0 bis 2, vorzugsweise 0 bis 1, insbesondere 0,1 bis 1 Gew.-Teil, ganz besonders bevorzugt 0,2 bis 0,5 Gew.-Teilen zum Einsatz, wobei sich diese Mengenangaben bei Einsatz eines Masterbatches auf das reine fluorierte Polyolefin beziehen.

### Komponente F (Weitere Zusätze)

Die erfindungsgemäßen Zusammensetzungen können weiterhin bis zu 20 Gew.-Teile, bevorzugt bis zu 10 Gew.-Teile, insbesondere bis zu 5 Gew.-Teile wenigstens eines üblichen Polymeradditivs wie ein Gleit- und Entformungsmittel, beispielsweise Pentaerytbrittetrastearat, ein Nukleiermittel, ein Antistatikum, einen Stabilisator, ein Lichtschutzmittel, einen Füll- und Verstärkungsstoff, ein Farbstoff oder Pigment sowie ein weiteres Flammschutzmittel oder einen Flammschutzsynergisten, beispielsweise einen anorganischen Stoff in nanoskaliger Form und/oder ein silikatisches Material wie Talk oder Wollastonit enthalten.

Des weiteren können die erfindungsgemäßen Zusammensetzungen bis zu 20 Gew.-Teile, bevorzugt bis zu 10 Gew.-Teile, insbesondere bis zu 5 Gew.-Teile weitere Polymerkomponenten wie Polyphenylenoxide, Polyester, Epoxyharze oder Novolake enthalten.

Alle Gewichtsteil-Angaben in dieser Anmeldung sind so zu normieren, dass die Summe der Gewichtsteile aller Komponenten in der Zusammensetzung gleich 100 gesetzt wird.

Die erfindungsgemäßen Zusammensetzungen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Zusammensetzungen können zur Herstellung von Formteilen jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Gegenstand der Erfindung sind daher auch ein Verfahren zur Herstellung der Zusammensetzung, deren Verwendung zur Herstellung von Formteilen sowie die Formteile selbst.

Beispiele für solche Formteile sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; weiterhin Platten, Rohre, Elektroinstallationskanäle, Profile für den Bausektor, Innenausbau und Außenanwendungen; Teile aus dem Gebiet der Elektrotechnik wie Schalter und Stecker sowie Automobilinnen- und -außenteile.

Insbesondere können die erfindungsgemäßen Zusammensetzungen beispielsweise zur Herstellung von folgenden Formteilen verwendet werden:

Innenausbauteile für Schienenfahrzeuge, Schiffe, Flugzeuge, Busse und Automobile, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, Flächige Wandelemente, Gehäuse für Sicherheitseinrichtungen, Formteile für Sanitär- und Badausrüstungen, Abdeckgitter für Lüfteröffnungen, Gehäuse für Gartengeräte.

Die folgenden Beispiele dienen der weiteren Erläuterung der Erfindung.

### Beispiele

Die in der Tabelle 1 angegebenen und nachfolgend kurz erläuterten Komponenten wurden auf einer ZSK-25 bei 240°C schmelzcompoundiert. Die Prüfkörper wurden auf einer Spritzgießmaschine Typ Arburg 270 E bei 240°C hergestellt.

### Komponente A

Lineares Polycarbonat auf Basis Bisphenol A mit einem gewichtsgemittelten Molekulargewicht (M̅_{w}) gemäß GPC von 26 000 g/Mol.

### Komponente B 1

Plexiglas^{®} 6N: Polymethylmethacrylat der Fa. Röhm GmbH & Co. KG (Darmstadt, Deutschland) mit einer Schmelzflussrate MVR, gemessen bei 230°C und 3,8 kg Stempellast von 12 cm³/10 min.

### Komponente B 2

Styrol/Acrylnitril-Copolymerisat mit einem Gewichtsverhältnis Styrol:Acrylnitril von 73:27 und mit einer Grenzviskosität von 0,55 dl/g (Messung an einer Lösung von 0,5 g/100 ml Methylenchlorid bei 20°C).

### Komponente C 1

ABS-Pfropfpolymerisat von 40 Gew.-Teilen eines Copolymerisats aus Styrol und Acrylnitril im Gewichtsverhältnis 73:27 auf 60 Gew.-Teile vernetzten Polybutadienkautschuk, hergestellt durch Emulsionspolymerisaten, mit einem mittleren Teilchendurchmesser von d₅₀ =0,3 µm.

### Komponente C 2

Paraloid^{®} EXL 2300: (Methylmethacrylat-gepfropfter Butylacrylat-Kautschuk der Fa. Rohm und Haas (Antwerpen, Belgien).

### Komponente C 3

Metablen^{®} S2001, Methylmethacrylat-gepfropfter Silikon-Butylacrylat-Kompositkautschuk der Fa. Mitsubishi Rayon Co., Ltd. (Tokyo, Japan).

### Komponente D

Bisphenol-A basierendes Oligophosphat

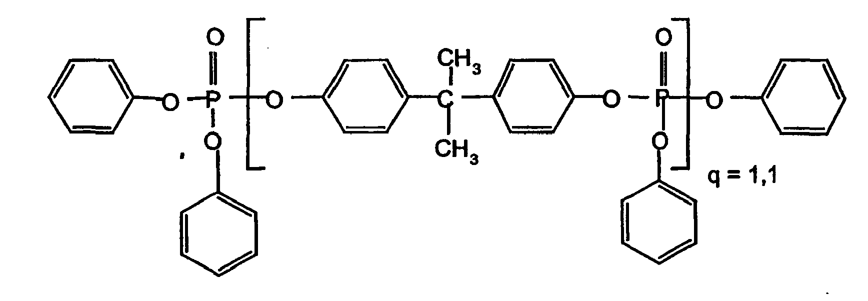

### Komponente E 1

Blendex^{®} 449, Teflon-Masterbatch aus 50 Gew.-% Styrol-Acrylnitril-Copolymerisat und 50 Gew.-% PTFE der Fa. General Electric Specialty Chemicals (Bergen op Zoom, Niederlande).

### Komponente E 2

PTFE/PMMA-Masterbatch aus 60 Gew.-% PTFE und 40 Gew.-% PMMA.

### Komponente F1/F2

Pentaerythrittetrastearat (PETS) (F1)
Phosphitstabilisator (F2)

Das Spannungsrissverhalten (ESC-Verhalten) wird an Stäben der Abmessung 80 mm x 10 mm x 4 mm untersucht. Als Testmedium wird eine Mischung 60 Vol.-% Toluol und 40 Vol.-% Isopropanol verwendet. Die Probekörper werden mittels einer Kreisbogenschablone vorgedehnt und die Zeit bis zum Bruchversagen in diesem Medium als Funktion der Vordehnung bestimmt. Beurteilt wird die minimale Vordehnung, bei der innerhalb von 5 min ein Bruchversagen eintritt.

Die Reißdehnung wird im Zugversuch nach ISO 527 bestimmt.

Das Brandverhalten wird nach UL-Subj. 94 V an Stäben der Abmessung 127 mm x 12,7 mm x 1,5 mm beurteilt.

Die Bestimmung der HDT/A erfolgt nach ISO 75.

Zur Ermittlung der Bindenahtfestigkeit wird gemäß ISO 179/1U die Schlagzähigkeit an der Bindenaht von beidseitig angespritzten Prüfkörpern der Dimension 170 x 10 x 4 mm gemessen.

Die thermoplastische Fließfähigkeit MVR (SchmelzvolumenflieBrate) wird nach ISO 1133 bestimmt.

Eine Zusammenstellung der Eigenschaften der erfindungsgemäßen Zusammensetzung bzw. daraus erhaltener Prüfkörper ist in der Tabelle 1 wiedergegeben. Alle Zusammensetzungen enthalten 0,4 Gew.-% PTFE und 3,4 Gew.-% Polyvinyl(co)-polymerisat (SAN bzw. PMMA), wobei letzteres die Summe aus B 1 und dem entsprechenden Anteil aus der Komponente E darstellt.

**Tabelle 1 Formmassen und ihre Eigenschaften**

| | | V1 | 1 | 2 |
|---|---|---|---|---|
| **Komponenten [Gew.-Teile]** | | | | |
| A | (PC) | 80,7 | 80,7 | 80,7 |
| B1 | (PMMA) | - | 3,1 | 3,1 |
| B2 | (M60) | 3,0 | - | - |
| C1 | (P60) | 5,0 | - | - |
| C2 | (Paraloid EXL 2300) | - | 5,0 | - |
| C3 | (Metablen S2001) | - | - | 5,0 |
| D | (BDP) | 10,0 | 10,0 | 10,0 |
| E1 | (PTFE-SAN-MB) | 0,8 | - | - |
| E2 | (PTFE/PMMA-MB) | - | 0,7 | 0,7 |
| F1 | (PETS) | 0,4 | 0,4 | 0,4 |
| F2 | (Phosphitstabilisator) | 0,1 | 0,1 | 0,1 |

| **Eigenschaften** | | | | |
|---|---|---|---|---|
| ESC (Bruch in 5 min bei) | | 1,6 | 2,2 | 2,2 |
| UL94 V (1.5 mm) | | V-0 | V-0 | V-0 |
| MVR(240°C/5kg) [m1/10min] | | 13,6 | 13,8 | 13,6 |
| Reißdehnung [%] | | 76 | 105 | 112 |
| Bindenahtfestigkeit [kJ/m2] | | 9 | 19 | 16 |
| HDT/A | | 91 | 92 | 95 |

| | | | | |
|---|---|---|---|---|
| V = Vergleichsbeispiel | | | | |

## Patentansprüche

1. Zusammensetzung bestehend aus
A) 40 bis 95 Gew.-Teile aromatisches Polycarbonat oder Polyestercarbonat oder Mischungen hieraus,
B) 1 bis 10 Gew.-Teile Polyalkyl(alkyl)acrylat, welches eine Schmelzeflussrate (MVR) von mindestens 8 cm³/10min gemessen bei 230°C mit einer Stempellast von 3,8 kg aufweist,
C) 0,1 bis 25 Pfropfpolymerisat, wobei die Pfropfgrundlage ausgewählt ist aus mindestens einer aus der Gruppe der Silikon-Kautschuke, Acrylat-Kautschuke und Silikon-Acrylat-Kompositkautschuke und wobei die Pfropfhülle aufgebaut ist aus einem (Meth)Acrylsäure(C₁-C₈)-Alkylester oder einem Gemisch von (Meth)Acrylsäure(C₁-C₈)-Alkylestern,
D) 0,2 bis 30 Gew.-Teile organische Phosphorsäureester,
E) 0 bis 2 Gew.-Teile Antidripping-Mittel, und
F) 0 bis 20 Gew.-Teile Additive ausgewählt aus mindestens einem aus der Gruppe der Gleit- und Entformungsmittel, Nukleiermittel, Antistatika, Stabilisatoren, Lichtschutzmittel, Farbstoff, Pigment, Füll- und Verstärkungsstoffe, Flammschutzmittel verschieden von Komponente D, und Flammschutzsynergisten und/oder weitere Polymerverbindungen gemäß Komponente F ausgewählt aus der Gruppe der Polyphenylenoxide, Polyester, Epoxyharze und Novolake, wobei der Gesamtgehalt an Styrol, Acrylnitril und Butadien in der Zusammensetzung, das heißt die Summe der als Restmonomer und der in Polymeren in gebundener Form vorliegenden entsprechenden Bestandteile, einen Maximalwert von 0,5 Gew.-%, bezogen auf die Gesamtzusammensetzung, nicht übersteigt.

2. Zusammensetzung gemäß Anspruch 1, wobei ein Maximalgehalt an Styrol, Acrylnitril und Butadien von insgesamt 0,1 Gew.-%, bezogen auf die Gesamtzusammensetzung nicht überschritten wird.

3. Zusammensetzung gemäß Anspruch 1, wobei ein Maximalgehalt an Styrol, Acrylnitril und Butadien von insgesamt 0,05 Gew.-%, bezogen auf die Gesamtzusammensetzung nicht überschritten wird.

4. Zusammensetzung gemäß Anspruch 1, in der das Polyalkyl(alkyl)acrylat ein Polymethylmethacrylat ist.

5. Zusammensetzung gemäß Anspruch 1, wobei die Pfropfgrundlage des Pfropfpolymerisats C ausgewählt ist aus mindestens einer aus der Gruppe der Acrylatkautschuke, Silikonkautschuke und Silikon-Acrylat-Kompositkautschuke und die Pfropfhülle aufgebaut ist aus reinem Metylmethacrylat.

6. Zusammensetzung gemäß Anspruch 1, wobei als Komponente D Phosphor bzw. Phosphonsäureester der allgemeinen Formel (IV) 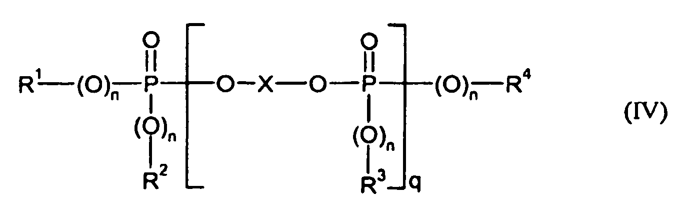 enthalten sind, worin
R¹, R², R³ und R⁴, unabhängig voneinander jeweils C₁ bis C₈-Alkyl, jeweils gegebenenfalls durch Alkyl substituiertes C₅ bis C₆-Cycloalkyl, C₆ bis C₂₀-Aryl oder C₇ bis C₁₂-Aralkyl,
n unabhängig voneinander, 0 oder 1
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten,

7. Zusammensetzung gemäß Anspruch 6, wobei es sich bei Komponente D um einen oligomeren Phosphor bzw. Phosphonsäureester mit q-Werten von 0,5 bis 15 handelt.

8. Zusammensetzung gemäß Anspruch 7, wobei q zwischen 1 und 2 liegt.

9. Zusammensetzung gemäß Anspruch 6, wobei X in Formel IV für 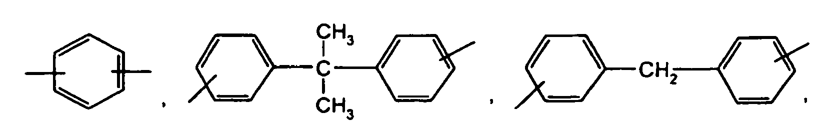 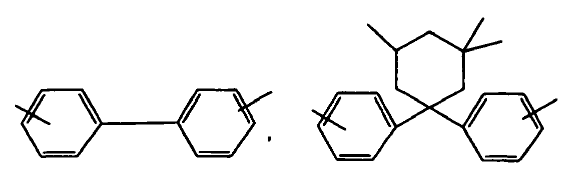 steht.

10. Zusammensetzung gemäß Anspruch 6, wobei X vom Bisphenol A abgeleitet ist.

11. Zusammensetzung gemäß Anspruch 1, enthaltend
65 bis 85 Gew.-Teile Komponente A),
1 bis 6 Gew.-Teile Komponente B),
1 bis 10 Gew.-Teile Komponente C),
2 bis 17 Gew.-Teile Komponente D) und
0,2 bis 0,5 Gew.-Teile Komponente E).

12. Zusammensetzung gemäß Anspruch 1, in denen das Antitropfinittel ein fluoriertes Polyolefin ist.

13. Zusammensetzung gemäß Anspruch 12, in denen das fluorierte Polyolefin in Form eines Masterbatches mit Polyalkyl(alkyl)acrylaten als Matrix einsetzt wird.

14. Verfahren zur Herstellung der Zusammensetzung gemäß Anspruch 1, in dem man die Bestandteile vermischt und bei erhöhter Temperatur schmelzcompoundiert bzw. schmelzextrudiert.

15. Verwendung der Zusammensetzung gemäß Anspruch 1 zur Herstellung von Formteilen.

16. Formteile, enthaltend eine Zusammensetzung gemäß Anspruch 1.

## Claims

1. Composition comprising
A) 40 to 95 parts by weight of aromatic polycarbonate or polyester carbonate or mixtures thereof,
B) 1 to 10 parts by weight of polyalkyl (alkyl)acrylate which has a melt flow rate (MVR) of at least 8 cm³/10 minutes measured at 230°C with a plunger load of 3.8 kg,
C) 0.1 to 25 parts by weight of graft polymer, wherein the graft base is selected from at least one member of the group comprising silicone rubbers, acrylate rubbers and silicone/acrylate composite rubbers and wherein the graft shell is built up from a (meth)acrylic acid (C₁-C₈) alkyl ester or a mixture of (meth)acrylic acid (C₁-C₈) alkyl esters,
D) 0.2 to 30 parts by weight of organic phosphoric acid esters,
E) 0 to 2 parts by weight of anti-drip agent, and
F) 0 to 20 parts by weight of additives selected from at least one member of the group comprising lubricants and mould release agents, nucleating agents, antistatics, stabilisers, light-stability agents, dyes, pigments, fillers and reinforcing substances, flameproofing agents different from component D, and flameproofing synergists and/or further polymer compounds according to component F selected from the group comprising polyphenylene oxides, polyesters, epoxy resins and novolak resins,
wherein the total content of styrene, acrylonitrile and butadiene in the composition, that is the sum total of the corresponding constituents present as residual monomer and the corresponding constituents present in bound form in the polymer, does not exceed a maximum value of 0.5 wt.% referred to the total composition.

2. Composition according to claim 1, wherein a maximum content of styrene, acrylonitrile and butadiene of in total 0.1 wt.%, referred to the total composition, is not exceeded.

3. Composition according to claim 1, wherein a maximum content of styrene, acrylonitrile and butadiene of in total 0.05 wt.%, referred to the total composition, is not exceeded.

4. Composition according to claim 1, in which the polyalkyl (alkyl)acrylate is a polymethyl methacrylate.

5. Composition according to claim 1, wherein the graft base of the graft polymer C is selected from at least one of the group comprising acrylate rubbers, silicone rubbers and silicone/acrylate composite rubbers, and the graft shell is built up from pure methyl methacrylate.

6. Composition according to claim 1, wherein phosphoric acid esters or phosphonic acid esters of the general formula (IV) 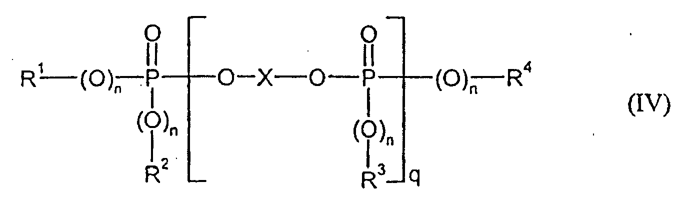 are contained as component D, wherein
R¹, R², R³ and R⁴ independently of one another in each case denote C₁ to C₈-alkyl, or C₅ to C₆-cycloalkyl, C₆ to C₂₀-aryl or C₇ to C₁₂-aralkyl in each case optionally substituted by alkyl,
n independently of one another is 0 or 1
q is 0 to 30, and
X denotes a mononuclear or polynuclear aromatic radical with 6 to 30 C atoms, or a linear or branched aliphatic radical with 2 to 30 C atoms, which may be OH-substituted and may contain up to 8 ether bonds.

7. Composition according to claim 6, wherein component D is an oligomeric phosphoric acid ester or phosphonic acid ester with q values of 0.5 to 15.

8. Composition according to claim 7, wherein q is between 1 and 2.

9. Composition according to claim 6, wherein X in formula IV denotes

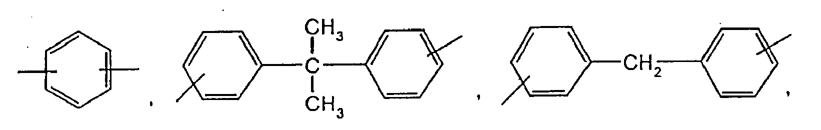

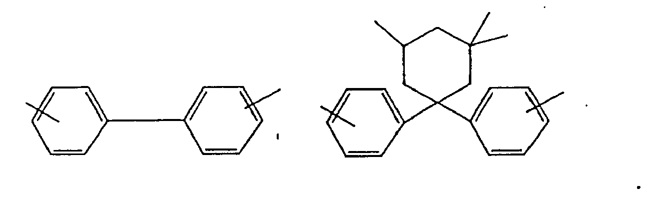

10. Composition according to claim 6, wherein X is derived from bisphenol A.

11. Composition according to claim 1, containing
65 to 85 parts by weight of component A),
1 to 6 parts by weight of component B),
1 to 10 parts by weight of component C),
2 to 17 parts by weight of component D), and
0.2 to 0.5 part by weight of component E).

12. Composition according to claim 1, in which the anti-drip agent is a fluorinated polyolefin.

13. Composition according to claim 12, in which the fluorinated polyolefin is used in the form of a master batch with polyalkyl (alkyl)acrylates as matrix.

14. Process for the production of the composition according to claim 1, in which the constituents are mixed and then melt compounded or melt extruded at elevated temperature.

15. Use of the composition according to claim 1 for the production of moulded parts.

16. Moulded parts containing a composition according to claim 1.

## Revendications

1. Composition consistant en
A) 40 à 95 parties en poids d'un polycarbonate ou polyestercarbonate aromatique ou leurs mélanges,
B) 1 à 10 parties en poids d'un poly(alkyl)acrylate d'alkyle ayant un indice de fluidité à l'état fondu (MVR) d'au moins 8 cm³/10 min, la mesure étant faite à 230°C sous une charge de piston de 3,8 kg,
C) 0,1 à 25 d'un polymère greffé dont le support de greffage est choisi parmi au moins un des caoutchoucs du groupe des caoutchoucs de silicones, des caoutchoucs d'acrylates et des caoutchoucs composites de silicone-acrylate et dont l'enveloppe de greffage est constituée d'un (méth)acrylate d'alkyle en C₁-C₈ ou d'un mélange de (méth)acrylates d'alkyle en C₁-C₈,
D) 0,2 à 30 parties en poids d'esters phosphoriques organiques,
E) 0 à 2 parties en poids d'un agent antigouttage, et
F) 0 à 20 parties en poids d'additifs choisis parmi au moins un additif du groupe des agents lubrifiants et agents de démoulage, des agents de nucléation, des agents antistatiques, des stabilisants, des agents de protection contre la lumière, des colorants, des pigments, des matières de charge et matières renforçantes, des agents ignifugeants autres que ceux du composant D et des synergistes d'agents ignifugeants et/ou d'autres composés polymères du composant F, choisis dans le groupe des oxydes de polyphénylène, des polyesters, des résines époxydiques et des Novolaques,
la teneur totale en styrène, acrylonitrile et butadiène de la composition, à savoir la somme de ces monomères présents à l'état de monomères résiduels ou à l'état combiné dans les polymères, ne dépassant pas la valeur maximale de 0,5 % du poids total de la composition.

2. Composition selon la revendication 1, dans laquelle la teneur maximale en styrène, acrylonitrile et butadiène ne dépasse pas au total 0,1 % du poids total de la composition.

3. Composition selon la revendication 1, dans laquelle la teneur maximale en styrène, acrylonitrile et butadiène ne dépasse pas au total 0,05 du poids total de la composition.

4. Composition selon la revendication 1, dans laquelle le poly(alkyl)acrylate d'alkyle est un polyméthacrylate de méthyle.

5. Composition selon la revendication 1, dans laquelle le support de greffage du polymère greffé C est choisi parmi au moins un caoutchouc du groupe des caoutchoucs d'acrylate, des caoutchoucs de silicone et des caoutchoucs composites de silicone-acrylate et l'enveloppe de greffage est constituée de méthacrylate de méthyle pur.

6. Composition selon la revendication 1 dans laquelle le composant D consiste en esters phosphoriques ou phosphoniques de formule générale (IV) 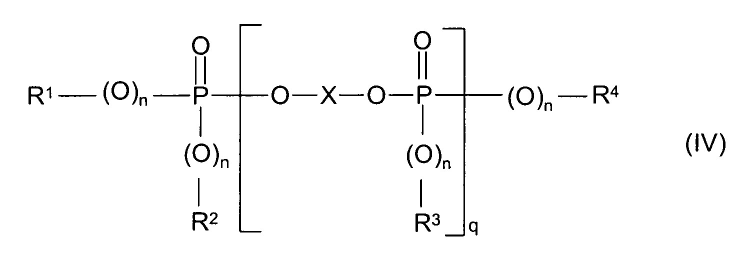 dans laquelle
R¹, R², R³ et R⁴ représentent chacun, indépendamment les uns des autres, un groupe alkyle en C₁-C₈, ou un groupe cycloalkyle en C₅-C₆, aryle en C₆-C₂₀ ou aralkyle en C₇-Cₗ₂, chacun d'eux éventuellement substitué par un groupe alkyle,
les indices n sont égaux chacun, indépendamment les uns des autres, à 0 ou 1,
q est un nombre allant de 0 à 30 et
X représente un radical aromatique mono- ou poly-cyclique en C₆-C₃₀, ou un radical aliphatique linéaire ou ramifié en C₂-C₃₀ qui peut être substitué par des groupes OH et peut contenir jusqu'à 8 liaisons éther.

7. Composition selon la revendication 6, dans laquelle le composant D consiste en un ester phosphorique ou phosphonique oligomère pour lequel q a des valeurs de 0,5 à 15.

8. Composition selon la revendication 7, dans laquelle q va de 1 à 2.

9. Composition selon la revendication 6, pour laquelle X de la formule (IV) représente

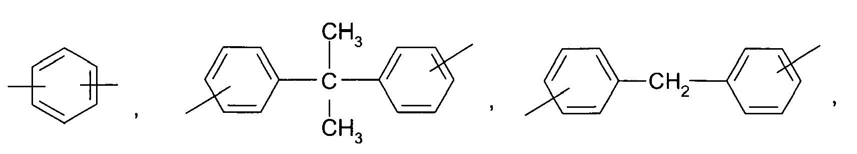

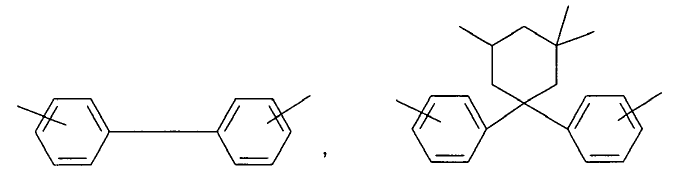

10. Composition selon la revendication 6 pour laquelle X dérive du bisphénol A.

11. Composition selon la revendication 1, contenant
65 à 85 parties en poids du composant A,
1 à 6 parties en poids du composant B,
1 à 10 parties en poids du composant C,
2 à 17 parties en poids du composant D et
0,2 à 0,5 partie en poids du composant E.

12. Composition selon la revendication 1 dans laquelle l'agent antigouttage est une polyoléfine fluorée.

13. Composition selon la revendication 12 pour laquelle la polyoléfine fluorée est mise en oeuvre sous forme d'un mélange-maître avec les poly(alkyl)acrylates d'alkyle servant de gangue.

14. Procédé pour la préparation de la composition selon la revendication 1 selon lequel on mélange les constituants et on les homogénéise ou extrude à l'état fondu à température élevée.

15. Utilisation de la composition selon la revendication 1 pour la fabrication de pièces moulées.

16. Pièces moulées contenant une composition selon la revendication 1.
